# EUROPEAN PATENT APPLICATION

(11) **EP 3 664 007 A1**
(43) Date of publication of application: **10.06.2020**
(21) Application number: 18840288.7
(22) Date of filing: 26.04.2018
(51) Int. Cl.: G06Q 30/02

(54) **INFORMATION PROCESSING DEVICE, INFORMATION PROCESSING METHOD, AND PROGRAM**

(30) Priority: 01.08.2017 JP 2017148880
(71) Applicant: Sony Corporation, Tokyo 108-0075 (JP)
(72) Inventor: OGAWA, Hiroaki, Tokyo 108-0075 (JP); NISHIKAWA, Kana, Tokyo 108-0075 (JP); OHMURA, Junki, Tokyo 108-0075 (JP); TOUYAMA, Keisuke, Tokyo 108-0075 (JP); TSURUTA, Yasushi, Tokyo 108-0075 (JP); KURIYA, Shinobu, Tokyo 108-0075 (JP)
(74) Representative: MFG Patentanwälte Meyer-Wildhagen Meggle-Freund Gerhard PartG mbB
(86) International application number: PCT/JP2018/016992
(87) International publication number: WO 2019/026361

(57) **Abstract**

[Problem] There are proposed an information processing device, an information processing method and a program which can adaptively control outputting of an advertisement message for virtual agent's virtual use of one or more products. [Solution] An information processing device includes: an information acquisition unit which acquires advertisement information selected based on information related to virtual agent's virtual use of one or more products; and an output control unit which controls outputting of an advertisement message including the information which is determined based on an attribute of the advertisement information and a character setting of the virtual agent, and is related to the virtual agent's virtual use of the product associated with the advertisement information.

## Description

### Field

The present disclosure relates to an information processing device, an information processing method and a program.

### Background

Conventionally, various techniques for realizing conversation between a virtual agent and a user have been developed.

For example, following Patent Literature 1 discloses a technique of selecting advertisement information based on a result of message exchange between a virtual agent and a user, and then inserting the advertisement information in a message to be transmitted to the user.

### Citation List

### Patent Literature

Patent Literature 1: JP 2001-338203 A

### Summary

### Technical Problem

However, the technique disclosed in Patent Literature 1 does not take into account controlling outputting of an advertisement message in response to virtual agent's virtual use of a product.

Therefore, the present disclosure proposes a new and improved information processing device, information processing method and program which can adaptively control outputting of an advertisement message for virtual agent's virtual use of one or more products.

### Solution to Problem

According to the present disclosure, an information processing device is provided that includes: an information acquisition unit which acquires advertisement information selected based on information related to virtual agent's virtual use of one or more products; and an output control unit which controls outputting of an advertisement message including the information, the information being determined based on an attribute of the advertisement information and a character setting of the virtual agent, and being related to the virtual agent's virtual use of the product associated with the advertisement information.

According to the present disclosure, an information processing method is provided that includes: acquiring advertisement information selected based on information related to virtual agent's virtual use of one or more products; and at a processor, controlling outputting of an advertisement message including the information, the information being determined based on an attribute of the advertisement information and a character setting of the virtual agent, and being related to the virtual agent's virtual use of the product associated with the advertisement information.

According to the present disclosure, a program is provided that causing a computer to function as: an information acquisition unit which acquires advertisement information selected based on information related to virtual agent's virtual use of one or more products; and an output control unit which controls outputting of an advertisement message including the information, the information being determined based on an attribute of the advertisement information and a character setting of the virtual agent, and being related to the virtual agent's virtual use of the product associated with the advertisement information.

### Advantageous Effects of Invention

As described above, according to the present disclosure, it is possible to adaptively control outputting of an advertisement message for virtual agent's virtual use of one or more products. In addition, the effect disclosed herein is not necessarily limited thereto, and may be any effect disclosed in the present disclosure. Brief Description of Drawings

FIG. 1 is an explanatory view illustrating a configuration example of an information processing system according to an embodiment of the present disclosure.
FIG. 2 is a functional block diagram illustrating a configuration example of an information processing device 10 according to the embodiment.
FIG. 3 is a view illustrating a configuration example of an advertisement DB 128 according to the embodiment.
FIG. 4 is a view illustrating a configuration example of an agent DB 130 according to the embodiment.
FIG. 5 is a view illustrating a configuration example of a virtual experience history DB 134 according to the embodiment.
FIG. 6 is a view illustrating a selection example of an advertisement target product based on user's speech.
FIG. 7 is a view illustrating another selection example of an advertisement target product based on user's speech.
FIG. 8 is a view illustrating a configuration example of an agent response DB 136 according to the embodiment.
FIG. 9 is a view illustrating an output example of an advertisement message and a second assistance message according to the embodiment.
FIG. 10 is a flowchart illustrating part of a processing flow according to the embodiment.
FIG. 11 is a flowchart illustrating part of a processing flow according to the embodiment.
FIG. 12 is a view illustrating a hardware configuration example of the information processing device 10 according to the embodiment.

### Description of Embodiments

A preferred embodiment of the present disclosure will be described in detail below with reference to the accompanying drawings. In addition, components having the substantially identical configurations in this description and the drawings will be assigned the same reference numerals, and therefore overlapping description thereof will be omitted.

Furthermore, a plurality of components having the substantially identical components will be assigned different alphabets after the identical reference numerals and distinguished in this description and the drawings in some cases. For example, a plurality of components having the substantially identical configuration will be distinguished as an information processing device 10a and an information processing device 10b as need arises. In this regard, each of a plurality of components having the substantially identical functional configuration does not need to be distinguished in particular, and will be assigned the identical reference numeral. For example, when the information processing device 10a and the information processing device 10b do not need to be distinguished in particular, the information processing device 10a and the information processing device 10b will be referred to simply as an information processing device 10.

Furthermore, "Description of Embodiments" will be described according to the following item order.
1. Configuration of Information Processing System
2. Detailed Description of Embodiment
3. Hardware Configuration
4. Modified Example

### <<1. Configuration of Information Processing System>>

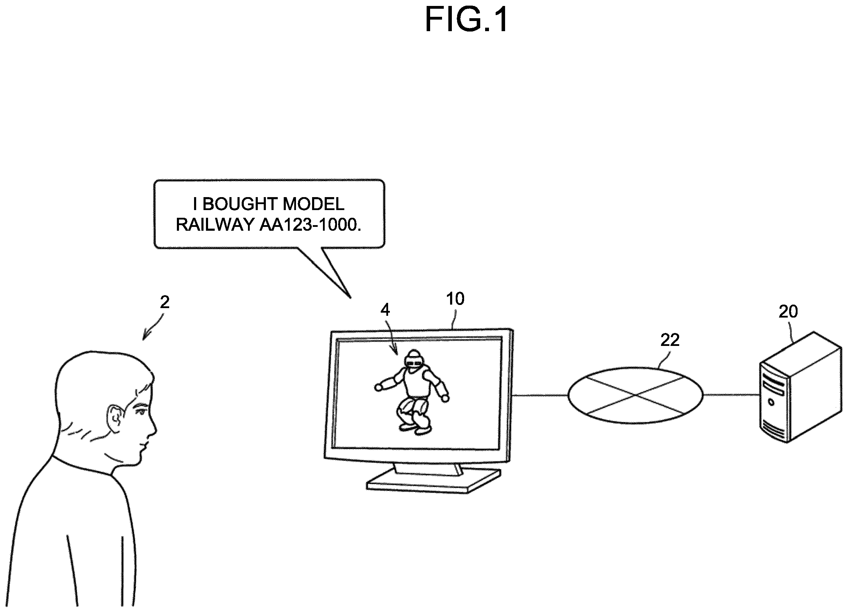

First, a configuration example of an information processing system according to an embodiment of the present disclosure will be described with reference to FIG. 1. As illustrated in FIG. 1, the information processing system includes an information processing device 10, an advertisement server 20 and a communication network 22.

### <1-1. Information Processing Device 10>

The information processing device 10 is a device which performs control related to conversation between a user and a virtual agent. In this regard, the virtual agent is a virtual object which makes conversation with the user and (unilaterally) speaks to the user. For example, the virtual agent is realized as a predetermined application (function). Furthermore, a message of the virtual agent may be outputted as a voice such as a synthesized voice as illustrated in, for example, FIG. 1, or may be displayed as a character string on a screen.

The information processing device 10 may be, for example, a general-purpose Personal Computer (PC), a tablet terminal, a game machine, a mobile telephone such as a smartphone, a mobile music player, a speaker, wearable devices such as a Head Mounted Display (HMD) and a headphone, an in-vehicle device (car navigation device) or a robot (such as a humanoid).

Furthermore, FIG. 1 illustrates only the one information processing device 10, yet is not limited to this example. A plurality of computers may operate in cooperation to realize the function of the information processing device 10 according to the present embodiment.

### <1-2. Advertisement Server 20>

The advertisement server 20 is a server in which a plurality of pieces of advertisement information is registered. Furthermore, the advertisement server 20 can distribute latest advertisement information to another device (such as the information processing device 10) via the communication network 22 described below. In this regard, the advertisement server 20 is managed by, for example, an advertising agency.

### <1-3. Communication Network 22>

The communication network 22 is a wired or wireless channel of information transmitted from a device connected with the communication network 22. For example, the communication network 22 may include public networks such as a telephone network, the Internet and a satellite communication network, various Local Area Networks (LAN) including the Ethernet (registered trademark) and the Wide Area Network (WAN). Furthermore, the communication network 22 may include a private network such an Internet Protocol-Virtual Private Network (IP-VPN).

### <1-4. Summary of Task>

The configuration of the information processing system according to the present embodiment has been described above. By the way, it is also desired that the virtual agent can transmit an advertisement to the user through conversation with the user. However, if the virtual agent outputs the advertisement without making a special device, it is generally difficult to gain a user's attention. For example, the user feels that the virtual agent automatically (mechanically) outputs an advertisement which the user is not interested in.

Hence, the information processing device 10 according to the present embodiment has been created focusing on the above situation. The information processing device 10 can acquire advertisement information selected based on information related to virtual agent's virtual use of one or more products, and control outputting of an advertisement message including information which is determined based on an attribute of the advertisement information and a character setting of the virtual agent, and is related to the virtual agent's virtual use of a product associated with the advertisement information. Consequently, it is possible to adaptively control outputting of the advertisement message for the virtual agent's virtual use of the one or more products. As a result, it becomes easy to gain the user's attention.

In addition, the information related to the virtual agent's virtual use of the one or more products is information indicating a history of the corresponding virtual agent's virtual use of the one or more products or a wish degree of the virtual agent's virtual use of the one or more products. For example, the history of the virtual use of the one or more products is stored in a virtual experience history DB 134 described below.

In addition, according to the present embodiment, the virtual agent may be making conversation or may not be making conversation with the user. In the latter case, for example, a voice corresponding to a message of the virtual agent can be outputted to a space (e.g., user's surroundings) where the user can hear the voice, or a video image including the message of the virtual agent can be displayed in a user's field of view. An example where the virtual agent is making conversation with the user will be mainly described below.

### <<2. Detailed Description of Embodiment>>

### <2-1. Configuration>

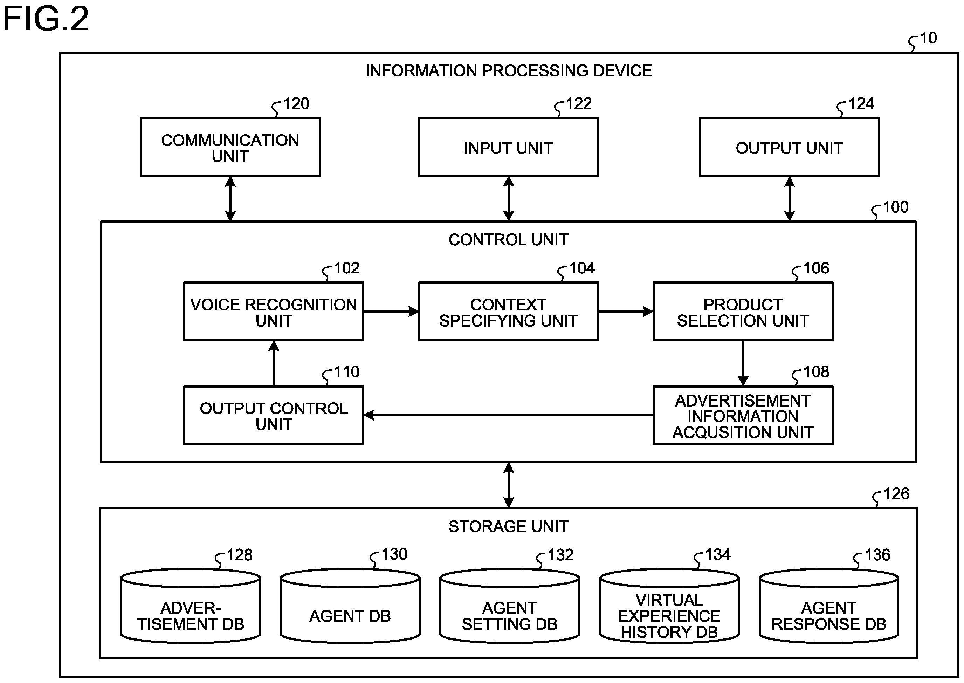

Next, the configuration of the information processing device 10 according to the present embodiment will be described. FIG. 2 is a functional block diagram illustrating a configuration example of the information processing device 10. As illustrated in FIG. 2, the information processing device 10 includes a control unit 100, a communication unit 120, an input unit 122, an output unit 124 and a storage unit 126.

### {2-1-1. Control Unit 100}

The control unit 100 can be configured to include processing circuits such as a Central Processing Unit (CPU) 150 and a Graphics Processing Unit (GPU) described below. The control unit 100 integrally controls an operation of the information processing device 10. Furthermore, as illustrated in FIG. 2, the control unit 100 includes a voice recognition unit 102, a context specifying unit 104, a product selection unit 106, an advertisement information acquisition unit 108 and an output control unit 110.

### {2-1-2. Voice Recognition Unit 102}

The voice recognition unit 102 recognizes a voice of user's speech collected by, for example, the input unit 122 and an external device (not illustrated). For example, the voice recognition unit 102 first recognizes the voice of the user's speech and thereby converts the voice into a character string. Furthermore, the voice recognition unit 102 performs natural language processing on the converted character string, and thereby analyzes a meaning of the speech.

### {2-1-3. Context Specifying Unit 104}

The context specifying unit 104 specifies, for example, context information at a time of the user's speech based on a recognition result of the voice recognition unit 102.

In this regard, the context information can include voice recognition results of last and/or current user's speech. For example, the context information may include a voice recognition result of speech during a last predetermined period (e.g., last 3 minutes), or voice recognition results of a predetermined number of (e.g., two) last speeches. Furthermore, in, for example, a scene in which a plurality of users exists in the same environment, the context information may include a voice recognition result of a last speech of the only user who has been identified to be currently speaking.

Furthermore, the context information may further include information indicating a time zone or a season at the time of the user's speech.

### {2-1-4. Product Selection Unit 106}

The product selection unit 106 selects one of products associated with a plurality of pieces of respective advertisement information registered in an advertisement DB 128 described below based on preference information of the corresponding virtual agent and the context information specified by the context specifying unit 104. For example, the product selection unit 106 selects one of products associated with a plurality of pieces of respective advertisement information based on the preference information of the corresponding virtual agent, the context information specified by the context specifying unit 104, and the number of times of advertising of an individual products associated with the corresponding virtual agent. In this regard, the preference information of the virtual agent can include a genre of a corresponding virtual agent's favorite product and a preference degree (weight) per product genre.

For example, the product selection unit 106 first (temporarily) selects one or more products from a plurality of products based on a combination of the number of times of advertising of an individual product associated with the corresponding virtual agent in the virtual experience history DB 134 described below, and preference information of the corresponding virtual agent stored in an agent DB 130 described below. For example, the product selection unit 106 may (temporarily) select the one or more products by preferentially selecting a product of a smaller number of times of advertising (e.g., a product of the least number of times of advertising) associated with the corresponding virtual agent. Consequently, it is possible to output advertisement information having a little variation, and therefore expect an effect that the user does not get bored. Alternatively, the product selection unit 106 may (temporarily) select the one or more products by preferentially selecting a product of a higher preference degree of the corresponding virtual agent. Consequently, it is possible to cause a deviation in a genre of the advertisement information to be outputted according to a character setting of the corresponding virtual agent.

Furthermore, the product selection unit 106 selects one of the (temporarily) selected one or more products as an advertisement target product based on a keyword specified from a voice recognition result of user's speech included in the context information specified by the context specifying unit 104. For example, by further referring to the virtual experience history DB 134, the product selection unit 106 selects one of the (temporarily) selected one or more products as the advertisement target product such that an advertisement message does not overlap an advertisement message previously outputted for the corresponding virtual agent or an advertisement message of contradicting contents is not outputted.

### (2-1-4-1. Advertisement DB 128)

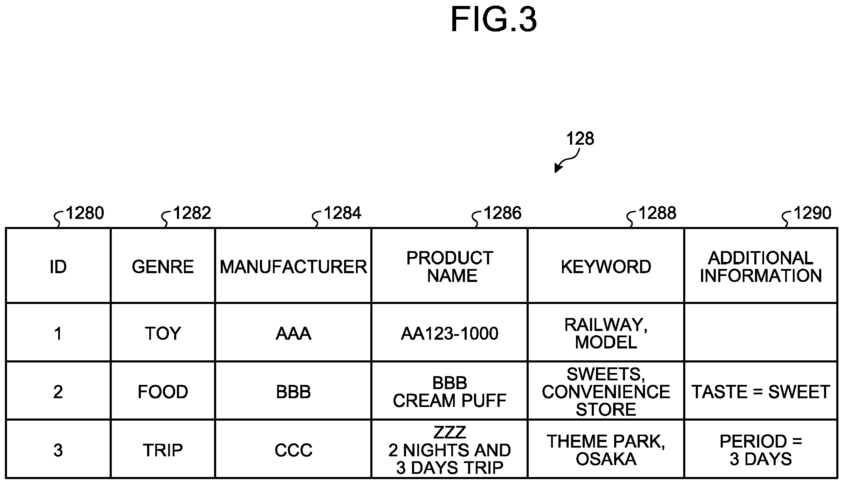

The advertisement DB 128 is a database which stores a plurality of pieces of advertisement information. FIG. 3 is a view illustrating a configuration example of the advertisement DB 128. As illustrated in FIG. 3, in the advertisement DB 128, for example, an ID 1280, a genre 1282, a manufacturer 1284, a product name 1286, a keyword 1288 and additional information 1290 are associated. In this regard, product IDs are stored in the ID 1280. Product genres of corresponding IDs are stored in the genre 1282. Manufacturer names or distributor names of products of corresponding IDs are stored in the manufacturer 1284. Product names of products of corresponding IDs are stored in the product name 1286. Keywords associated with products of corresponding IDs are stored in the keyword 1288. Additional information which can be used when advertisement messages of products of corresponding IDs are generated is stored in the additional information 1290. Although described in detail below, the output control unit 110 generates the advertisement message such that, for example, the advertisement message of a corresponding product includes an expression matching the additional information.

### (2-1-4-2. Agent DB 130)

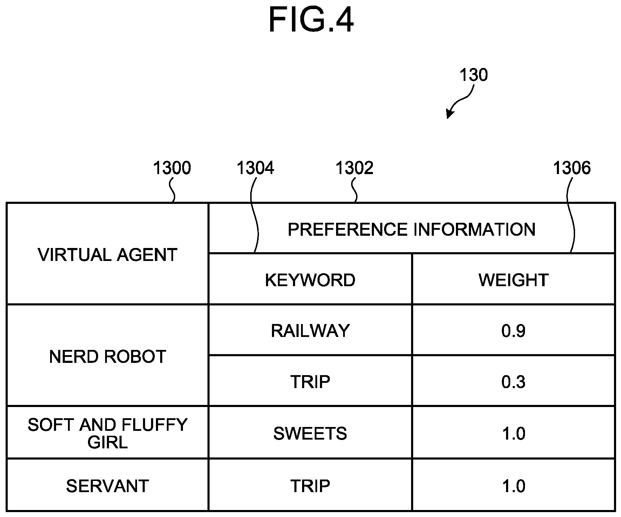

The agent DB 130 is a database in which preference information of individual virtual agents is stored. FIG. 4 is a view illustrating a configuration example of the agent DB 130. As illustrated in FIG. 4, in the agent DB 130, for example, a virtual agent 1300 and preference information 1302 are associated. Furthermore, the preference information 1302 includes a keyword 1304 and a weight 1306. In this regard, identification information (such as names) of individual virtual agents is stored in the virtual agent 1300. Keywords of genres of corresponding virtual agents' favorite products are stored in the keyword 1304. Values (weights) indicating preference degrees of corresponding virtual agents per product genre stored in the keyword 1304 are stored in the weight 1306.

### (2-1-4-3. Agent Setting DB 132)

The agent setting DB 132 is a database in which setting information of characters (personalities) of the individual virtual agents is stored. In addition, the characters of the individual virtual agents can be set in advance by an administrator.

### (2-1-4-4. Virtual Experience History DB 134)

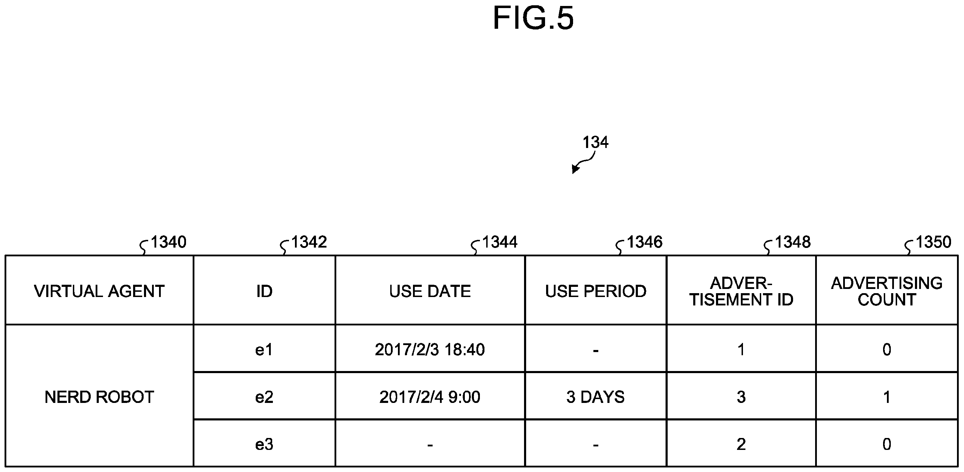

The virtual experience history DB 134 is a database in which a history of individual virtual agent's virtual use of one or more products is stored. FIG. 5 is a view illustrating a configuration example of the virtual experience history DB 134. As illustrated in FIG. 5, in the virtual experience history DB 134, for example, a virtual agent 1340, an ID 1342, a use date 1344, a use period 1346, an advertisement ID 1348 and an advertising count 1350 are associated. In this regard, identification information of the individual virtual agents is stored in the virtual agent 1340. IDs for identifying corresponding virtual agent's individual use experiences of individual products are stored in the ID 1342. Dates at which experiences associated with corresponding IDs have been made are stored in the use date 1344. Periods during which corresponding experiences have been made are stored in the use period 1346. IDs of advertisement information associated with corresponding products are stored in the advertisement ID 1348. Totals of numbers of times of corresponding virtual agent's advertising of corresponding products are stored in the advertising count 1350.

In addition, according to the present embodiment, it may be decided per virtual agent that a wish degree of the virtual agent for a product which the virtual agent does not use yet is high. Furthermore, it may be decided that a virtual agent's wish degree of use of a product which is already used by the virtual agent is low (or there is no wish).

Furthermore, when and which product an individual virtual agent uses can be determined by following methods. For example, a condition (for example, one of products is used twice a week) related to an interval of virtual use of a product is determined per virtual agent. Furthermore, a use date of a product is probabilistically determined per virtual agent within a restriction of the condition. Furthermore, a type of a product used by an individual virtual agent may be probabilistically determined based on, for example, preference information of the individual virtual agent.

### (2-1-4-5. Specific Example)

### -a. Selection of Product Genre

Specific examples of the above function of the product selection unit 106 will be described below with reference to FIGS. 3 to 5. Hereinafter, an example where an agent who the user is making conversation with is a "nerd robot" will be described. First, the product selection unit 106 selects one or more products from a plurality of products stored in the advertisement DB 128 based on a combination of a genre and a weight of a favorite product associated with the "nerd robot" in the agent DB 130, and the number of times of advertising of the individual product associated with the "nerd robot" in the virtual experience history DB 134.

In, for example, an example illustrated in FIG. 4, the product selection unit 106 first probabilistically selects one of a "railway" and a "trip" at a rate of "9:3" as the genre of a selection target product. Next, the product selection unit 106 selects a predetermined number of products of the selected genre from a plurality of products stored in the advertisement DB 128. For example, the product selection unit 106 selects a predetermined number of products from a plurality of products of the selected genre in order of a smaller number of times of advertising associated with the "nerd robot" in the virtual experience history DB 134. Alternatively, the product selection unit 106 may select a predetermined number of products from a plurality of products of the selected genre at random.

-b. Selection of Advertisement Target Product Based on Context

Next, the product selection unit 106 selects one of the predetermined number of selected products as the advertisement target product based on one or more keywords specified from a voice recognition result of last user's speech specified by the context specifying unit 104.

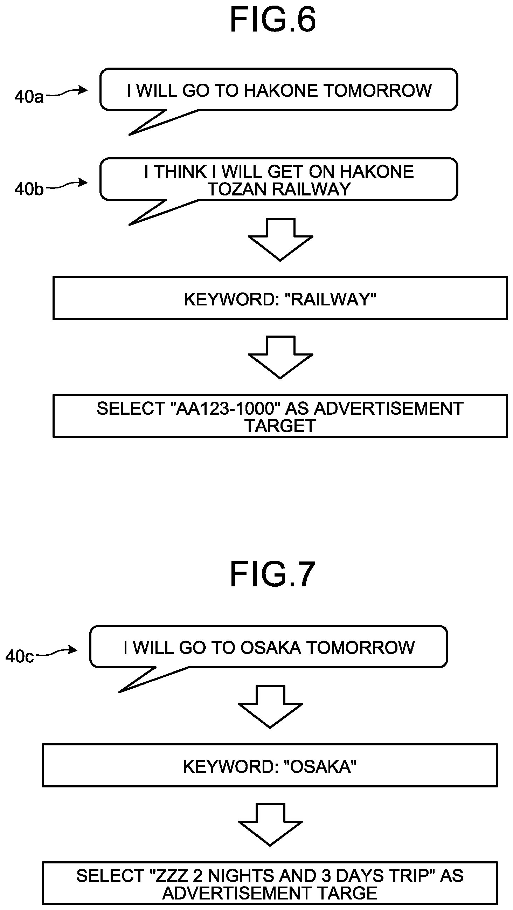

FIG. 6 is a view illustrating a selection example of the advertisement target product based on the last user's speech. When a last user's speech 40 is "I will go to Hakone tomorrow" and "I think I will get on Hakone Tozan Railway" as illustrated in FIG. 6, the "railway" can be specified from the voice recognition result of this speech 40. In this case, the product selection unit 106 may select one of products associated with the keyword "railway" among the predetermined number of selected products as the advertisement target product. In an example of the advertisement DB 128 illustrated in, for example, FIG. 3, only a product "AA123-1000" whose advertisement ID is "1" is associated with the keyword "railway". Hence, when the predetermined number of products includes the product "AA123-1000", the product selection unit 106 selects the product "AA123-1000" as the advertisement target product from the predetermined number of selected products by using perfect matching based on, for example, a corresponding keyword.

FIG. 7 is a view illustrating another selection example of the advertisement target product based on the last user's speech. As illustrated in FIG. 7, when a last user's speech 40c is "I will go to Osaka tomorrow", "Osaka" can be specified as keyword from a voice recognition result of the speech 40c. In this case, the product selection unit 106 may select one of products associated with the keyword "Osaka" among the predetermined number of selected products as the advertisement target product. In an example of the advertisement DB 128 illustrated in, for example, FIG. 3, only a "ZZZ 2 nights and 3 days trip" whose advertisement ID is "3" is associated with the keyword "Osaka". Hence, when the predetermined number of products includes the product "ZZZ 2 nights and 3 days trip", the product selection unit 106 may select a product "ZZZ 2 nights and 3 days trip" as the advertisement target product from the predetermined number of products.

In this regard, the method is not limited to perfect matching, and the product selection unit 106 may use a matching method such as partial matching or probabilistic matching. Alternatively, the product selection unit 106 may use a synonym dictionary or may use a machine learning algorithm such as word2vec. These methods can increase the number of matching target products.

### --Modified Example

In the modified example, the product selection unit 106 may further change a reflection degree (weight) of context information for selecting one of the predetermined number of selected products, according to a character setting of a corresponding virtual agent. When, for example, a personality of the corresponding virtual agent is a type who "reads an atmosphere of a scene", the product selection unit 106 may increase the reflection degree of the context information for selecting one of the predetermined number of products. Furthermore, when the personality of the corresponding virtual agent is a type who "does not read an atmosphere of a scene", the product selection unit 106 may decrease the reflection degree of the context information for selecting one of the predetermined number of products. For example, in this case, the product selection unit 106 may set the reflection degree of the context information to "0".

### {2-1-5. Advertisement Information Acquisition Unit 108}

The advertisement information acquisition unit 108 is one example of an information acquisition unit according to the present disclosure. The advertisement information acquisition unit 108 acquires from the advertisement DB 128 advertisement information associated with the product selected by the product selection unit 106.

### {2-1-6. Output Control Unit 110}

The output control unit 110 controls outputting of various pieces of information for the output unit 124. For example, the output control unit 110 causes the output unit 124 to output an advertisement message determined based on an attribute of the advertisement information (e.g., a product genre associated with the advertisement information) acquired by the advertisement information acquisition unit 108, and a character setting of the corresponding virtual agent. In this regard, the advertisement message can include an expression (subjective expression) matching the advertisement information acquired by the advertisement information acquisition unit 108 and the character setting of the virtual agent. For example, the advertisement message includes a name of a product associated with the advertisement information, date information of corresponding virtual agent's virtual use of the product, and an expression matching the character setting of the virtual agent.

For example, the output control unit 110 first determines an advertisement message ("advertisement message determination processing"), next determines an output timing of the advertisement message ("advertisement message output timing determination processing"), and then controls outputting of the advertisement message at the determined output timing ("message output control processing"). Contents of each processing will be described in detail below.

### (2-1-6-1. Determination of Advertisement Message)

First, contents of the above "advertisement message determination processing" will be described. The output control unit 110 can determine an advertisement message based on the attribute of the advertisement information acquired by the advertisement information acquisition unit 108, the character setting of the corresponding virtual agent and registered contents of the virtual experience history DB 134.

In a case where, for example, a product associated with the advertisement information acquired by the advertisement information acquisition unit 108 has already (virtually) been used by the corresponding virtual agent, the output control unit 110 determines an advertisement message including an expression indicating use such as "You bought ○○". Furthermore, in a case where the product associated with the acquired advertisement information is not used by the corresponding virtual agent, the output control unit 110 determines an advertisement message including an expression indicating a wish such as "I want to buy ○○".

### -Determination Example 1

A determination example of an advertisement message will be described below in more detail. For example, the output control unit 110 may generate the advertisement message based on a template message associated with an attribute of the acquired advertisement information and the corresponding virtual agent in an agent response DB 136 described below.

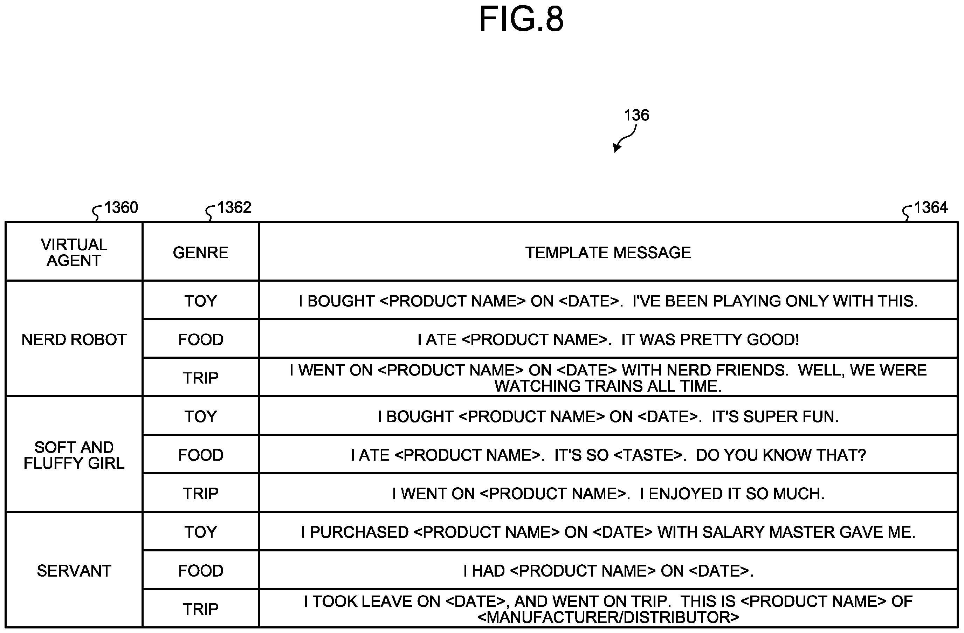

The agent response DB 136 is a database in which templates (template messages) for advertisement messages of individual virtual agents are stored. FIG. 8 is a view illustrating a configuration example of the agent response DB 136. As illustrated in FIG. 8, in the agent response DB 136, for example, a virtual agent 1360, a genre 1362 and a template message 1364 are associated. In this regard, identification information of the individual virtual agents is stored in the virtual agent 1360. Individual genres of products are stored in the genre 1362. Template messages which can be used when corresponding virtual agents advertise products of corresponding genres are stored in the template message 1364.

For example, the corresponding virtual agent is the "nerd robot", and the "ZZZ 2 nights and 3 days trip" illustrated in FIG. 3 is selected as an advertisement target product. In this example, in the example illustrated in FIG. 8, the output control unit 110 first specifies a template message associated with the virtual agent "nerd robot" and the genre "trip" in the agent response DB 136. Furthermore, the output control unit 110 generates an advertisement message such as "I went on the ZZZ 2 nights and 3 days trip at 9:00 on 2017/2/4 with nerd friends. Well, we were watching trains all time!" based on a use history of the selected product and the specified template message associated with the virtual agent in the virtual experience history DB 134.

In addition, FIG. 8 illustrates the example where only one template message is registered for a combination of the virtual agent 1360 and the genre 1362. However, the example is not limited to this example, and a plurality of template messages may be registered for the combination. In this case, even when the virtual agent and the product genre are the same, it is possible to output advertisement messages of different expressions depending on, for example, advertisement output timings.

### -Determination Example 2

Alternatively, the output control unit 110 may generate an advertisement message based on the attribute of the advertisement information acquired by the advertisement information acquisition unit 108, the character setting of the corresponding virtual agent and data of a result learned in advance by using machine learning (e.g., deep learning). For example, the administrator creates multiple sentence examples of advertisement messages matching combinations of (character settings of) individual virtual agents and product genres per combination. Next, machine learning can be performed based on the combination and the created multiple sentence examples. Subsequently, the output control unit 110 can generate the advertisement message by inputting (applying) the product genre associated with the advertisement information acquired by the advertisement information acquisition unit 108, and the character setting of the corresponding virtual agent to the result data of the machine learning. In addition, the output control unit 110 may generate the advertisement message by further inputting the date of virtual agent's virtual use of the corresponding product to the result data of the machine learning.

According to these advertisement message generation examples, it is possible to generate advertisement messages including subjective expressions which are suitable to character settings of virtual agents.

### --Modified Example

According to the modified example, the output control unit 110 may convert a use date into a relative expressions such as "yesterday" instead of using the use date of the product registered in the virtual experience history DB 134 as is, and then generate an advertisement message by using the converted expressions. In this case, it is possible to generate an advertisement message closer to a spoken language, and consequently give a more natural impression to users.

### (2-1-6-2. Determination of Output Timing)

Next, contents of the above "advertisement message output timing determination processing" will be described. The output control unit 110 can determine the advertisement message output timing based on a predetermined reference after the advertisement message is determined. For example, the output control unit 110 determines a time which passes a predetermined time from an end of a current or last user's speech as the advertisement message output timing.

Alternatively, a time zone in which the corresponding advertisement information needs to be advertised may be registered in advance. In this case, the output control unit 110 determines the time zone associated with the advertisement information as the advertisement message output timing.

### (2-1-6-3. Output Control of Message)

Next, contents of the above "message output control processing" will be described. The output control unit 110 can cause the output unit 124 to output the determined advertisement message at the determined output timing. For example, the output control unit 110 causes a voice output unit (included in the output unit 124) to output a synthesized voice corresponding to the advertisement message at the determined timing. Alternatively, the output control unit 110 causes a display unit (included in the output unit 124) to display a character string of the advertisement message at the determined timing.

### -First Assistance Message

Furthermore, the output control unit 110 may cause the output unit 124 to output a first assistance message indicating that a subject changes, based on a comparison between a predetermined index value related to the attribute of the advertisement information acquired by the advertisement information acquisition unit 108, and a predetermined index value related to the context information specified by the context specifying unit 104, and may cause the output unit 124 to output the advertisement message immediately after outputting the first assistance message. In this regard, a comparison result of the predetermined index value related to the attribute of the advertisement information and the predetermined index value related to the context information may indicate, for example, a common degree of a subject (topic) between a product associated with the corresponding advertisement information and the corresponding context information. Furthermore, the first assistance message is a message such as "Let's change the subject".

When, for example, an absolute value of a difference between the predetermined index value related to the attribute of the advertisement information and the predetermined index value related to the context information is a predetermined threshold or more, the output control unit 110 causes the output unit 124 to output the first assistance message, and causes the output unit 124 to output the advertisement message immediately after outputting the first assistance message. Furthermore, when the absolute value of the difference between the predetermined index value related to the attribute of the advertisement information and the predetermined index value related to the context information is less than the predetermined threshold, the output control unit 110 causes the output unit 124 to output the advertisement message without causing the output unit 124 to output the first assistance message.

### -Second Assistance Message

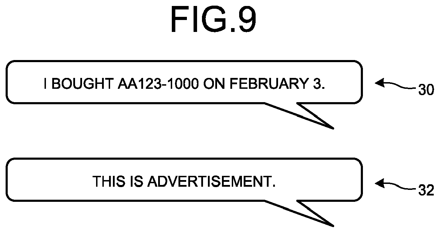

Furthermore, the output control unit 110 may cause the output unit 124 to output a second assistance message indicating that the advertisement message is an advertisement at the same time as or immediately after the outputting of the advertisement message. As illustrated in, for example, FIG. 9, the output control unit 110 may cause the output unit 124 to output a second assistance message 32 indicating that an advertisement message 30 is an advertisement immediately after outputting the advertisement message 30.

According to the modified example, the output control unit 110 may cause the output unit 124 to output predetermined music for notifying the user of that the advertisement message is the advertisement immediately after outputting the advertisement message instead of outputting the second assistance message. Alternatively, every time the virtual agent is activated, the output control unit 110 may cause the virtual agent to speak first every time a message that there is a case where an advertisement message is spoken (outputted).

### {2-1-7. Communication Unit 120}

The communication unit 120 can be configured to include, for example, a communication device 166 described below. The communication unit 120 transmits or receives information to or from another device. For example, every time the advertisement server 20 updates one or more pieces of advertisement information, the communication unit 120 receives the one or more pieces of updated advertisement information from the advertisement server 20.

### {2-1-8. Input Unit 122}

The input unit 122 accepts various inputs of the user. Furthermore, the input unit 122 transmits accepted input information to the control unit 100. For example, the input unit 122 transmits the accepted input information to the control unit 100 by way of wired communication or wireless communication.

This input unit 122 can include a voice input device such as a microphone. Furthermore, the input unit 122 may include, for example, a touch panel, a button, a lever or a switch.

### {2-1-9. Output Unit 124}

The output unit 124 includes a display unit and/or a voice output unit. The display unit displays a video image under control of the output control unit 110. The display unit can include, for example, a Liquid Crystal Display (LCD), an Organic Light Emitting Diode (OLED) or a projector.

Furthermore, the voice output unit outputs a voice under control of the output control unit 110. The voice output unit can be configured to include, for example, a speaker, an earphone or a headphone. In addition, the display unit and the voice output unit may be configured as separate devices or may be configured as an integrated device.

### {2-1-10. Storage Unit 126}

The storage unit 126 can be configured to include, for example, a storage device 164 described below. The storage unit 126 stores various types of items of data and various types of software. As illustrated in, for example, FIG. 2, the storage unit 126 stores the advertisement DB 128, the agent DB 130, the agent setting DB 132, the virtual experience history DB 134 and the agent response DB 136. Furthermore, the storage unit 126 stores voice data of collected user's speech and/or a voice recognition result of the speech.

### <2-2. Processing Flow>

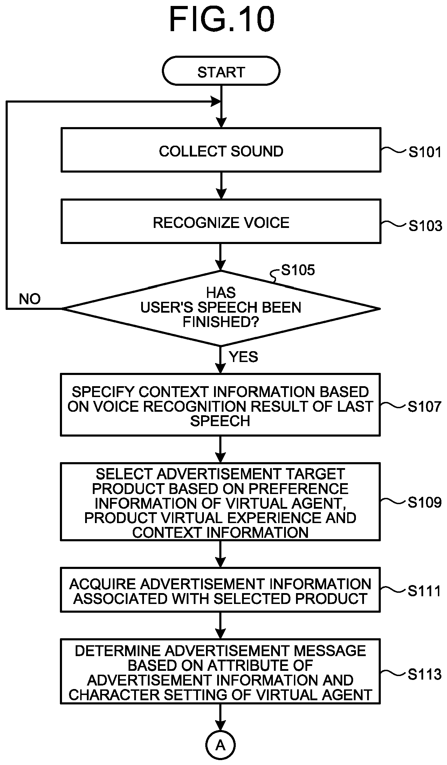

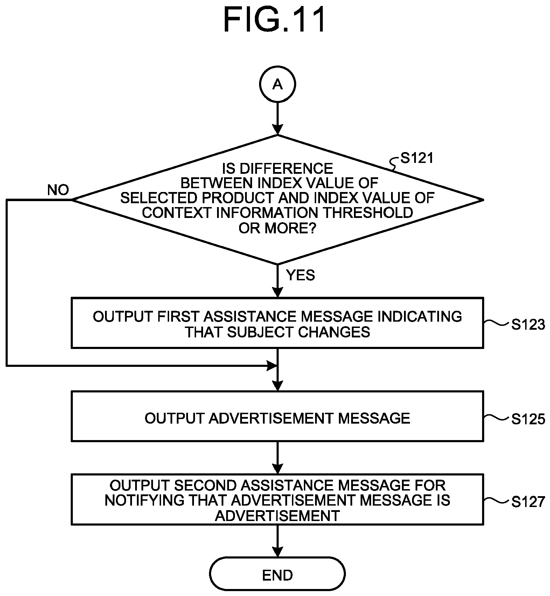

A configuration according to the present embodiment will be described below. Next, the processing flow according to the present embodiment will be described with reference to FIGS. 10 and 11.

FIG. 10 is a flowchart illustrating part of the processing flow according to the present embodiment. First, the user speaks to, for example, the virtual agent who the user is making conversation with. Furthermore, the input unit 122 of the information processing device 10 collects a voice of the speech (S101).

Furthermore, the voice recognition unit 102 recognizes the collected voice (S103).

Subsequently, the control unit 100 decides whether or not the user's speech has been finished based on a sound collection result of the input unit 122 (S105). When it is decided that the user's speech has not been finished (S105: No), processing subsequent to S101 is repeated.

On the other hand, when it is decided that the user's speech has been finished (S105: Yes), the context specifying unit 104 specifies context information at a time of the user's speech based on the voice recognition result in S103 (S107).

Subsequently, the product selection unit 106 selects one of products associated with a plurality of pieces of respective advertisement information stored in the advertisement DB 128 as an advertisement target product based on the context information specified in S107, preference information of the corresponding virtual agent and a use history of an individual product associated with the corresponding virtual agent (S109).

Subsequently, the advertisement information acquisition unit 108 acquires from the advertisement DB 128 the advertisement information associated with the product selected in S109 (S111)

Subsequently, the output control unit 110 determines an advertisement message based on the attribute of the advertisement information acquired in S111 and the character setting of the corresponding virtual agent (S113).

Hereinafter, a processing flow after S113 will be described with reference to FIG. 11. As illustrated in FIG. 11, after S113, the output control unit 110 compares the predetermined index value related to the attribute of the product selected in S109, and the predetermined index value related to the context information specified in S107, and then decides whether or not the absolute value of the difference between both of the predetermined index values is the predetermined threshold or more (S121). When the absolute value of the difference is less than the predetermined threshold (S121: No), the output control unit 110 performs processing in S125 described below.

On the other hand, when the absolute value of the difference is the predetermined threshold or more (S121: Yes), the output control unit 110 causes the output unit 124 to output the first assistance message indicating that the subject changes (S123).

Subsequently, the output control unit 110 causes the output unit 124 to output the advertisement message determined in S113 (S125).

Subsequently, the output control unit 110 causes the output unit 124 to output the second assistance message indicating that the advertisement message is the advertisement (S127).

### <2-3. Effect>

### {2-3-1. Effect 1}

As described above, the information processing device 10 according to the present embodiment acquires advertisement information selected based on information related to virtual agent's virtual use of one or more products, and then controls outputting of an advertisement message including information which is determined based on an attribute of the advertisement information and a character setting of the virtual agent, and is related to the virtual agent's virtual use of a product associated with the advertisement information. Consequently, it is possible to adaptively control outputting of the advertisement message for the virtual agent's virtual use of the one or more products.

For example, the information processing device 10 selects one of a plurality of pieces of advertisement information registered in the advertisement DB 128 based on the preference information of the virtual agent which is making conversation with the user, and the history of virtual agent's virtual use of the one or more products, and then determines an advertisement message based on the attribute of the selected advertisement information and the character setting of the virtual agent. Consequently, it is possible to output the advertisement message as if the virtual agent talked about a consistent experience of the corresponding virtual agent. Consequently, it becomes easy to gain user's attention.

### {2-3-2. Effect 2}

Furthermore, the information processing device 10 can further select one of products associated with a plurality of pieces of respective advertisement information registered in the advertisement DB 128 based on context information including last user's speech. Consequently, the information processing device 10 can output an advertisement message based on advertisement information which is highly relevant to the last user's speech. Consequently, it is possible to avoid that the user has a feeling that something is wrong when the advertisement message is outputted.

### {2-3-3. Effect 3}

Furthermore, when the character setting of the virtual agent is switched and even if the information processing device 10 selects the same advertisement information, it is possible to output an advertisement message of a different expression (from that of the character setting before the switching). Consequently, a different advertisement message is outputted per character setting, so that it becomes easier to obtain the user's attention.

### <<3. Hardware Configuration>>

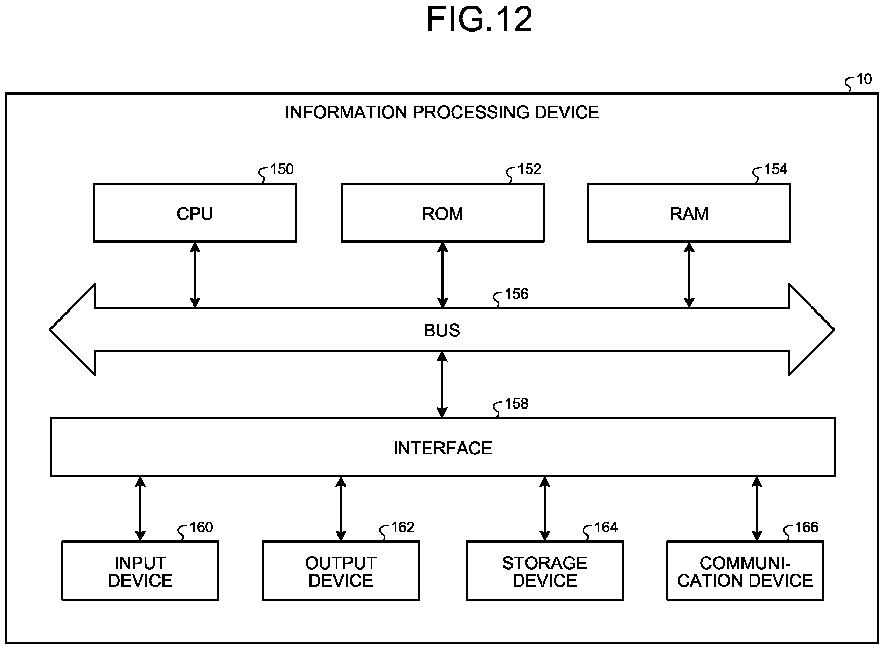

Next, the information processing device 10 according to the present embodiment will be described with reference to FIG. 12. As illustrated in FIG. 12, the information processing device 10 includes the CPU 150, a Read Only Memory (ROM) 152, a Random Access Memory (RAM) 154, a bus 156, an interface 158, an input device 160, an output device 162, the storage device 164 and the communication device 166.

The CPU 150 functions as an arithmetic operation processing device and a control device, and controls an overall operation in the information processing device 10 according to various programs. Furthermore, the CPU 150 realizes the function of the control unit 100 in the information processing device 10. In addition, the CPU 150 includes a processor such as a microprocessor.

The ROM 152 stores programs used by the CPU 150 and control data such as arithmetic operation parameters.

The RAM 154 temporarily stores, for example, the programs executed by the CPU 150, and data in use.

The bus 156 includes a CPU bus. This bus 156 mutually connects the CPU 150, the ROM 152 and the RAM 154.

The interface 158 connects the input device 160, the output device 162, the storage device 164 and the communication device 166 with the bus 156.

The input device 160 includes an input unit such as a touch panel, a button, a switch, a lever or a microphone through which the user inputs information, and an input control circuit which generates an input signal based on a user's input and outputs the input signal to the CPU 150.

The output device 162 includes a display such as an LCD or an OLED or a display device such as a projector. Furthermore, the output device 162 includes a voice output device such as a speaker.

The storage device 164 is a data storage device which functions as the storage unit 126. The storage device 164 is, for example, a storage medium, a recording device which records data in a storage medium, a reading device which reads data from the storage medium, or a deleting device which deletes data recorded in the storage medium.

The communication device 166 is, for example, a communication interface which includes a communication device (e.g., a network card) which connects with the communication network 22. Furthermore, the communication device 166 may be a wireless LAN supporting communication device, a Long Term Evolution (LTE) supporting communication device or a wired communication device which performs wired communication. This communication device 166 functions as the communication unit 120.

### <<4. Modified Example>>

The preferred embodiment of the present disclosure has been described in detail with reference to the accompanying drawings. However, the present disclosure is not limited to this example. One having ordinary knowledge in the technical field to which the present disclosure belongs understands that it is obviously possible to conceive various change examples and modification examples within the scope of the technical idea recited in the claims, and these examples naturally belong to the technical scope of the present disclosure.

### <4-1. Modified Example 1>

For example, the information processing device 10 may enable questions and answers of the user and the virtual agent after outputting an advertisement message. In one example, it is assumed that an advertisement message that "I ate BBB cream puff" is outputted, and then the user speaks a question "when?" to the virtual agent. In this case, the information processing device 10 may first recognizes a voice of collected speech, then refer to, for example, the virtual experience history DB 134 based on a recognition result, and determine a response message (e.g., "It's yesterday") for the collected speech. Furthermore, the information processing device 10 may output a voice corresponding to the response message to the user.

### <4-2. Modified Example 2>

The above-described embodiment has described the example where preference information of an individual virtual agent is set by the administrator, yet is not limited to this example. For example, the preference information of the individual virtual agent (e.g., a preference degree of a favorite product and a type of a favorite product itself) may be automatically changed within a certain range of an initial setting value according to a lapse of time. In one example, the preference information of the individual virtual agent may be dynamically changed according to current news or a season.

Alternatively, the preference information of the virtual agent may be dynamically changed per virtual agent according to a keyword specified from speech of the user who is making conversation with the virtual agent. For example, the preference information of the virtual agent may be dynamically changed such that a preference degree of the virtual agent related to a product of a genre associated with the keyword specified from the user's speech becomes higher.

### <4-3. Modified Example 3>

Furthermore, the configuration of the information processing device 10 according to the present embodiment is not limited to the example illustrated in FIG. 2. For example, one or more of the input unit 122, the output unit 124 and the storage unit 126 may be included in another device which can communicate with the information processing device 10 instead of being included in the information processing device 10. Furthermore, one or more of the advertisement DB 128, the agent DB 130, the agent setting DB 132, the virtual experience history DB 134 and the agent response DB 136 may be stored in, for example, another device (e.g., advertisement server 20) connected with the communication network 22 instead of being stored in the storage unit 126.

### <4-4. Modified Example 4>

Each step in the processing flow according to the above-described embodiment may not be necessarily processed in the disclosed order.

For example, the order of each step may be changed as appropriate and processed. Furthermore, part of each step may be processed in parallel or individually instead of being processed in time series. Furthermore, part of the disclosed steps may be omitted or another step may be further added.

Furthermore, according to the above-described embodiment, a computer program which causes hardware such as the CPU 150, the ROM 152 and the RAM 154 to exhibit a function equivalent to each component of the information processing device 10 according to the above-described embodiment can be also provided. Furthermore, a storage medium in which the computer program has been recorded is also provided.

Furthermore, the effects disclosed in this description are only explanatory or exemplary, and are not limited thereto. That is, the technique according to the present disclosure can provide other effects which are obvious for one of ordinary skill in the art based on the disclosure of this description together with the above effects or in place of the above effects.

In addition, following configurations also belong to the technical scope of the present disclosure.
(1) An information processing device comprising:
   an information acquisition unit which acquires advertisement information selected based on information related to virtual agent's virtual use of one or more products; and
   an output control unit which controls outputting of an advertisement message including the information, the information being determined based on an attribute of the advertisement information and a character setting of the virtual agent, and being related to the virtual agent's virtual use of the product associated with the advertisement information.
(2) The information processing device according to (1), wherein
   the information related to the virtual use of the one or more products is information indicating a history of the virtual agent's virtual use of the one or more products or a wish degree of the virtual use of the one or more products, and
   the advertisement message indicates that the product associated with the advertisement information is used by the virtual agent, or that the virtual agent wishes to use the product associated with the advertisement information.
(3) The information processing device according to (2), wherein
   one of the one or more products is selected based on the information related to the virtual use of the one or more products, and
   the information acquisition unit acquires advertisement information associated with the selected product.
(4) The information processing device according to (3), wherein the one of the one or more products is further selected based on context information including a last speech of a user who is an output target of the advertisement message.
(5) The information processing device according to (4), wherein one product associated with a keyword included in a voice recognition result of the speech is selected from the one or more products.
(6) The information processing device according to (4) or (5), wherein the context information further includes information indicating a time zone or a season at a time of the speech.
(7) The information processing device according to any one of (4) to (6), wherein the one of the one or more products is further selected based on a number of times of advertising of each of the one or more products associated with the virtual agent.
(8) The information processing device according to (7), wherein one product whose number of times of advertising is least among the one or more products is selected.
(9) The information processing device according to (7) or (8), wherein the one of the one or more products is further selected based on preference information of the virtual agent.
(10) The information processing device according to (9), wherein the one of the one or more products is probabilistically selected based on a preference degree of the virtual agent related to each of the one or more products.
(11) The information processing device according to (9) or (10), wherein the output control unit causes an output unit to output a first message based on a comparison, and causes the output unit to output the advertisement message immediately after outputting the first message, the first message indicating that a subject changes, and the comparison being performed between a predetermined index value of the attribute of the advertisement information and a predetermined index value of the context information.
(12) The information processing device according to (11), wherein
   when an absolute value is a predetermined threshold or more, the output control unit causes the output unit to output the first message and causes the output unit to output the advertisement message immediately after outputting the first message, the absolute value being an absolute value of a difference between the predetermined index value related to the attribute of the advertisement information and the predetermined index value related to the context information, and
   when the absolute value is less than the predetermined threshold, the output control unit causes the output unit to output the advertisement message without causing the output unit to output the first message, the absolute value being the absolute value of the difference between the predetermined index value related to the attribute of the advertisement information and the predetermined index value related to the context information.
(13) The information processing device according to (11) or (12), wherein the output control unit causes the output unit to output a second message at a same time as or immediately after the outputting of the advertisement message, the second message indicating that the advertisement message is an advertisement.
(14) The information processing device according to (13), wherein the virtual agent is a virtual agent which is making conversation with the user.
(15) The information processing device according to (14), wherein the advertisement message includes a name of the product associated with the advertisement information, and date information of the virtual agent's virtual use of the product.
(16) The information processing device according to (15), further comprising:
   a voice recognition unit which recognizes a voice of the collected speech of the user; and
   a storage unit which stores voice data of the speech of the user and a voice recognition result of the speech.
(17) The information processing device according to (16), wherein the output control unit determines the advertisement message based on the attribute of the advertisement information and the character setting of the virtual agent, and causes the output unit to output the determined advertisement message.
(18) The information processing device according to (17), further comprising:
   a context specifying unit which specifies the context information based on the collected speech of the user; and
   a product selection unit which selects the one of the one or more products based on the information related to the virtual use of the one or more products and the context information,
   wherein the information acquisition unit acquires the advertisement information associated with the product selected by the product selection unit.
(19) An information processing method comprising:
   acquiring advertisement information selected based on information related to virtual agent's virtual use of one or more products; and
   at a processor, controlling outputting of an advertisement message including the information, the information being determined based on an attribute of the advertisement information and a character setting of the virtual agent, and being related to the virtual agent's virtual use of the product associated with the advertisement information.
(20) A program causing a computer to function as:
   an information acquisition unit which acquires advertisement information selected based on information related to virtual agent's virtual use of one or more products; and
   an output control unit which controls outputting of an advertisement message including the information, the information being determined based on an attribute of the advertisement information and a character setting of the virtual agent, and being related to the virtual agent's virtual use of the product associated with the advertisement information.

### Reference Signs List

- 10: INFORMATION PROCESSING DEVICE
- 20: ADVERTISEMENT SERVER
- 22: COMMUNICATION NETWORK
- 100: CONTROL UNIT
- 102: VOICE RECOGNITION UNIT
- 104: CONTEXT SPECIFYING UNIT
- 106: PRODUCT SELECTION UNIT
- 108: ADVERTISEMENT INFORMATION ACQUISITION UNIT
- 110: OUTPUT CONTROL UNIT
- 120: COMMUNICATION UNIT
- 122: INPUT UNIT
- 124: OUTPUT UNIT
- 126: STORAGE UNIT
- 128: ADVERTISEMENT DB
- 130: AGENT DB
- 132: AGENT SETTING DB
- 134: VIRTUAL EXPERIENCE HISTORY DB
- 136: AGENT RESPONSE DB

## Claims

1. An information processing device comprising:
an information acquisition unit which acquires advertisement information selected based on information related to virtual agent's virtual use of one or more products; and
an output control unit which controls outputting of an advertisement message including the information, the information being determined based on an attribute of the advertisement information and a character setting of the virtual agent, and being related to the virtual agent's virtual use of the product associated with the advertisement information.

2. The information processing device according to claim 1, wherein
the information related to the virtual use of the one or more products is information indicating a history of the virtual agent's virtual use of the one or more products or a wish degree of the virtual use of the one or more products, and
the advertisement message indicates that the product associated with the advertisement information is used by the virtual agent, or that the virtual agent wishes to use the product associated with the advertisement information.

3. The information processing device according to claim 2, wherein
one of the one or more products is selected based on the information related to the virtual use of the one or more products, and
the information acquisition unit acquires advertisement information associated with the selected product.

4. The information processing device according to claim 3, wherein the one of the one or more products is further selected based on context information including a last speech of a user who is an output target of the advertisement message.

5. The information processing device according to claim 4, wherein one product associated with a keyword included in a voice recognition result of the speech is selected from the one or more products.

6. The information processing device according to claim 4, wherein the context information further includes information indicating a time zone or a season at a time of the speech.

7. The information processing device according to claim 4, wherein the one of the one or more products is further selected based on a number of times of advertising of each of the one or more products associated with the virtual agent.

8. The information processing device according to claim 7, wherein one product whose number of times of advertising is least among the one or more products is selected.

9. The information processing device according to claim 7, wherein the one of the one or more products is further selected based on preference information of the virtual agent.

10. The information processing device according to claim 9, wherein the one of the one or more products is probabilistically selected based on a preference degree of the virtual agent related to each of the one or more products.

11. The information processing device according to claim 9, wherein the output control unit causes an output unit to output a first message based on a comparison, and causes the output unit to output the advertisement message immediately after outputting the first message, the first message indicating that a subject changes, and the comparison being performed between a predetermined index value of the attribute of the advertisement information and a predetermined index value of the context information.

12. The information processing device according to claim 11, wherein
when an absolute value is a predetermined threshold or more, the output control unit causes the output unit to output the first message and causes the output unit to output the advertisement message immediately after outputting the first message, the absolute value being an absolute value of a difference between the predetermined index value related to the attribute of the advertisement information and the predetermined index value related to the context information, and
when the absolute value is less than the predetermined threshold, the output control unit causes the output unit to output the advertisement message without causing the output unit to output the first message, the absolute value being the absolute value of the difference between the predetermined index value related to the attribute of the advertisement information and the predetermined index value related to the context information.

13. The information processing device according to claim 11, wherein the output control unit causes the output unit to output a second message at a same time as or immediately after the outputting of the advertisement message, the second message indicating that the advertisement message is an advertisement.

14. The information processing device according to claim 13, wherein the virtual agent is a virtual agent which is making conversation with the user.

15. The information processing device according to claim 14, wherein the advertisement message includes a name of the product associated with the advertisement information, and date information of the virtual agent's virtual use of the product.

16. The information processing device according to claim 15, further comprising:
a voice recognition unit which recognizes a voice of the collected speech of the user; and
a storage unit which stores voice data of the speech of the user and a voice recognition result of the speech.

17. The information processing device according to claim 16, wherein the output control unit determines the advertisement message based on the attribute of the advertisement information and the character setting of the virtual agent, and causes the output unit to output the determined advertisement message.

18. The information processing device according to claim 17, further comprising:
a context specifying unit which specifies the context information based on the collected speech of the user; and
a product selection unit which selects the one of the one or more products based on the information related to the virtual use of the one or more products and the context information,
wherein the information acquisition unit acquires the advertisement information associated with the product selected by the product selection unit.

19. An information processing method comprising:
acquiring advertisement information selected based on information related to virtual agent's virtual use of one or more products; and
at a processor, controlling outputting of an advertisement message including the information, the information being determined based on an attribute of the advertisement information and a character setting of the virtual agent, and being related to the virtual agent's virtual use of the product associated with the advertisement information.

20. A program causing a computer to function as:
an information acquisition unit which acquires advertisement information selected based on information related to virtual agent's virtual use of one or more products; and
an output control unit which controls outputting of an advertisement message including the information, the information being determined based on an attribute of the advertisement information and a character setting of the virtual agent, and being related to the virtual agent's virtual use of the product associated with the advertisement information.
